# EUROPEAN PATENT SPECIFICATION

(11) **EP 3 287 094 B1**
(45) Date of publication and mention of the grant of the patent: **11.12.2019**
(21) Application number: 15889779.3
(22) Date of filing: 23.04.2015
(51) Int. Cl.: A61C 8/00, A61C 13/00

(54) **BLOCK FOR PRODUCING INDIVIDUAL ROOT POST FLANGES FOR DENTAL IMPLANTOLOGY AND METHOD FOR PRODUCING A PERSONALISED ROOT POST FLANGE FOR DENTAL IMPLANTOLOGY**
BLOCK ZUR HERSTELLUNG VON INDIVIDUELLEN WURZELSTIFTFLANSCHEN FÜR DENTALE IMPLANTOLOGIE UND VERFAHREN ZUR HERSTELLUNG EINES INDIVIDUALISIERTEN WURZELSTIFTFLANSCHES FÜR DENTALE IMPLANTOLOGIE
BLOC POUR LA FABRICATION DE MOIGNONS PERSONNALISÉS POUR L'IMPLANTOLOGIE DENTAIRE, ET PROCÉDÉ DE FABRICATION D'UN MOIGNON PERSONNALISÉ POUR L'IMPLANTOLOGIE DENTAIRE

(43) Date of publication of application: 28.02.2018
(73) Proprietor: Xam-Mar Mangrane, Esteban, 25002 Lleida (ES)
(72) Inventor: Xam-Mar Mangrane, Esteban, 25002 Lleida (ES)
(74) Representative: Carlos Hernando, Borja
(86) International application number: PCT/ES2015/070341
(87) International publication number: WO 2016/170198

(56) References cited:
- EP-A1- 2 837 357
- WO-A1-00/06042
- WO-A1-2014/140002
- US-A1- 2010 062 396
- US-A1- 2011 171 603
- US-A1- 2011 171 603

## Description

### OBJECT OF THE INVENTION

The invention relates to a block for producing personalised root post flanges for dental implantology and to a method for producing a personalised root post flange for dental implantology, of the type in dental implantology that can be screwed onto a previously osseointegrated implant, normally in an incorrect position, and over which aesthetic material can be directly placed, providing the dental part with shape and colour, without having to apply a dental crown over the root post flange. Said block is characterised in that it has a structure that allows the selection of the mouth angle required for the channel used for the insertion of the screw for fixing to the implant.

The field of application of the present invention falls within the sector of dentistry, particularly in the area of the industry that manufactures accessory parts and elements for manufacturing dental prostheses, specifically for manufacturing dental implant prostheses.

Document WO2014/140002 discloses a milling blank for an attachment abutment.

### BACKGROUND OF THE INVENTION

The technical problem that the present invention aims to solve is that in many cases implants are incorrectly placed in the bone of the patient, and the vertical axis thereof, which will determine the position of the screw of the prosthesis that will later be installed, is located such that the placement of said prosthesis is not aesthetically pleasing and/or may undermine the functionality thereof.

Currently, structures for dental prostheses are manufactured with CAD-CAM technology (Computer-Aided Design and Computer-Aided Manufacturing), reducing errors in traditional manufacturing that uses lost-wax casting processes.

One of the structures manufactured using CAD-CAM are root post flanges with an emergency profile and shape personalised to each patient and situation, which are subsequently screwed to the implant. Cemented over this root post flange is a dental crown or dental prosthesis in the shape and colour of the tooth, which will completely cover the root post flange.

When implants are incorrectly placed and the vertical axes thereof do not allow for a correct placement of the screwed prosthesis, since the hole for the insertion or removal of the screw for fixing to the implant is placed in an aesthetic or important area for the correct functioning of the prosthesis, or simply because the result would not be aesthetically pleasing or would impair the functionality of the prosthesis, it is necessary to completely cover the root post flange of the prosthesis with the cemented dental crown. The main drawbacks of the solution are:
it blocks the extraction of the prosthesis, which would be necessary in the case of a problem with the screw that fixes the personalised root post flange to the implant, and it would be necessary to break the cemented crown located on top in order to have access to the access channel for the screw, and
it implies the need to manufacture two structures: the root post flange and the crown.

However, if the implant is correctly placed in the bone of the patient, the hole of the channel for the screw will be properly placed, and the aesthetic material, which provides the prosthetic tooth with shape and colour, can therefore be placed directly on the prosthesis or root post flange, thereby achieving a screwed prosthesis, not a cemented one as in the previously described case.

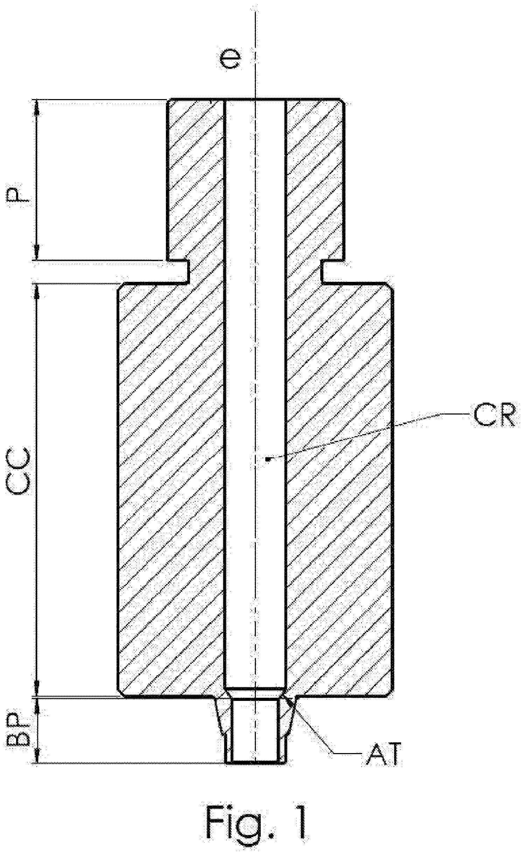

For manufacturing these root post flanges, there are titanium blocks or cylinders (Fig. 1) available on the market in which the connection to the implant is already pre-machined in the block itself. The machining process of said connection of the implant is very delicate and has to be very exact in measurement and tolerances, which is difficult to achieve with current milling machines in the dental sector, which is why these pre-machined connections with highly precise CNC (Computer Numerical Control) machines are offered in order to thus facilitate the work of dental technicians who then only have to machine the exterior of body of the block, which does not require a high degree of accuracy to shape the root post flange to be installed in the implant. These blocks ensure that said connection between the implant and the block itself is perfect. Afterwards, the block is modelled through a specific milling design of the block itself in order to create the root post flange.

Specifically, these blocks in the state of the art (Fig.1) comprise:
A cylindrical body,
A pre-machined connection base on the bottom part of the cylindrical body, the shape of which will be determined by the shape of the connection of the implant,
A vertical through channel through which the screw that fixes the block to the implant will pass, once the exterior of the block has been milled and converted into the root post flange, and also through which a screwdriver will subsequently be inserted, which will act on the screw head to fix the same to the implant,
An interior milling that gives shape to the seat of the aforementioned screw head for fixing to the implant,
A gripping protrusion which has the geometry of the support of the milling machine in order to be able to fasten the block to said support and shape the root post flange by milling the block.

These blocks, however, have a significant limitation since the through channel for the insertion or removal of the screw for fixing to the implant is straight and pre-machined, located in coincidence with the axial axis of the cylindrical body which makes up the block and with the implant axis; therefore when the position of the implant is incorrect, it is not possible to change the direction of the channel for the insertion of the screw and it is necessary to cement the crown over the root post flange to cover the hole of the channel for the insertion or removal of the screw.

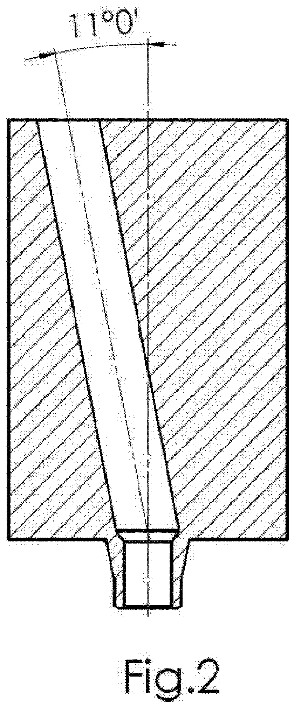

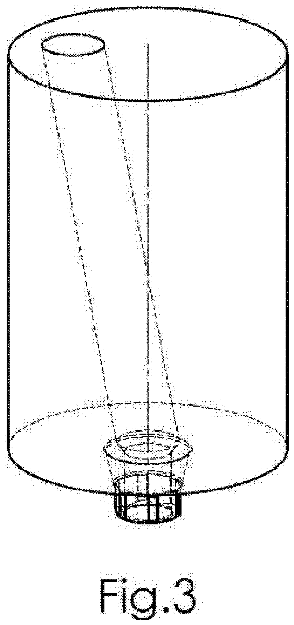

The applicant knows of the existence of a block (Fig. 2 and Fig. 3) which has a channel for the insertion of the fixing screw that comes from the exterior surface of the block to the seat of the screw head for fixing to the implant. Instead of coinciding with the axial axis of the cylinder of the body of the block, said channel has a fixed and pre-machined angle of 11° with respect to said axis, only being able to solve the problems of incorrect dental implant positioning in a very small percentage. This solution has the same problem as the conventional block with the straight through channel, parallel to the previously mentioned axial axis. The through channel is pre-machined with an angle of 11° without providing the technician the option of modifying said angle, thus limiting the possibility of directly manufacturing a root post flange with aesthetic material if the necessary angle for rectification is greater than 11°.

The main difference between the blocks of the state of the art and the block object of the present invention is that the blocks of the state of the art have a fixed angle, of 0° or 11°, which is predetermined and pre-machined without the possibility of being manipulated or adapted. However, the block object of the present invention does not have a pre-machined angled channel, allowing the intended or required angle to be machined according to the design at a later phase, along with the shape of the designed and personalised root post flange, by CAD/CAM.

Therefore, the object of the present invention is to develop an improved type of block to form the root post flange, for which the channel for the insertion of the screw for fixing to the implant can be angular according to the needs in each specific case.

### DESCRIPTION OF THE INVENTION

The present invention relates to a block for producing personalised root post flanges for dental implantology according to claim 1 and to a method for producing a personalised root post flange according to claim 5. Said block used for the subsequent production of personalised root post flanges is applicable in dental implantology to fix the implant which has been previously integrated into the bone by means of screws, without taking into account whether the position of the implant in the bone of the patient is correct or incorrect, allowing the personalised root post flange, coated with aesthetic material that gives shape and colour to the dental piece, to be fixed directly to the implant.

Specifically, the block for producing personalised or individualized root post flanges comprises a cylindrical body with an axial axis; a connection base at the bottom part of the cylindrical body with an inner channel to connect to the dental implant and an axial axis that coincides with that of the cylindrical body; a machined interior that determines the seat of the fixing screw head for the screwing between the block and the dental implant; and a gripping protrusion to fasten the block to the support of a machine and enable its external machining, also having a blind vertical channel section after the seat of the fixing screw head, the axis of the blind channel section coinciding with the axial axis of the cylindrical body.

Thus, the block object of the invention is a block for producing a root post flange for dental implantology, the main difference thereof to the state of the art being that it has a straight and blind section over the machined seat of the screw, from which a second machining phase is carried out by a technician. In addition to designing the exterior shape of the root post flange, the technician will also design with CAD/CAM an angled channel for the insertion or removal of the fixing screw after the end of the vertical blind channel section of the block. Said angle can be anywhere between 0° and 40°, which is the limit to be able to act on the screw by means of a screwdriver, with respect to the axial axis of the cylindrical body.

Said blind vertical section, located after the seat of the screw for fixing to the implant, allows for the subsequent screwing of the root post flange in the implant at different angles by making the insertion and removal of screws of different lengths possible in a through channel made in the block, in other words, the height of the blind vertical channel section will be defined by the length of the screw, which is determined by the type of implant, since it has to pass through the angled channel and be vertically placed with the implant in order to be screwed. The length of the blind vertical channel section is variable and dependent of the length of the fixing screw and of the type of connection required by the implant. Likewise, the inner machining which determines the seat of the fixing screw head is placed between the end of the blind vertical channel section and the connection base.

The screws and tools used to fix the block to the angled channel are preferably screws and tools specifically designed for said purpose, even if they do not form part of the object of the present invention.

In any case, the possibility of being able to angle the channel and freely reposition the hole for the insertion or removal of the screw saves time and reduces the steps for producing the prosthetic crown, since the aesthetic material (which gives shape and colour to the prosthesis) can be directly placed on the structure or root post flange, producing the prosthesis in a single step and with a single structure from the block object of the present invention.

Specifically, the block described is configured, as previously described, based on a single metallic piece comprising a cylindrical body, with pre-machined base with a connection at the bottom part of said cylindrical body, the shape of which will be determined by the shape of the connection of the implant onto which the prosthesis will be screwed, and which, instead of a through and vertical channel for the passage of the fixing screw, has a blind vertical channel section from which a second through channel will be designed using CAD-CAM which can be angled between 0° and 40° with respect to the axial axis of the cylinder. This is carried out in a subsequent production phase for the block, in addition to the machining of the exterior surface of the block to form the root post flange.

Likewise, the block, which can be produced in titanium, Cr-Co, Tilite or in any metal alloy or synthetic material used in the dental sector, has a gripping protrusion which has the geometry of the support of the machine for machining, in order to be able to fasten the block to said support and form the root post flange. This protrusion may be in the vertical axis of the block or on a side. The shape, size or position of this protrusion will depend on the design of the support of the machine for machining used in each case.

Likewise, the method for producing a personalised root post flange of the invention comprises:
A design phase, wherein, starting from the block as described herein and preferably by means of a design software (CAD), a trajectory and angle are calculated and defined with respect to the axial axis of a through channel located between the end of the blind vertical channel section and the exterior of the block, defining too the exterior shape of said block, all in function of the conditioning factors of the installed implant,
A machining phase, wherein said block is machined by means of the machining of said through channel between the end of the blind vertical channel section and the exterior of the block to allow the passage of the fixing screw to the implant, thus communicating the end of the blind vertical channel section with the exterior of the block, in accordance with the definition made in the design phase, and
An additional machining phase, wherein the exterior of the block is machined in accordance with the definition made in the design phase and which will give shape to the body of the root post flange which will subsequently receive the aesthetic material that will finally give shape and colour to the dental piece.

The two previous machining phases are carried out by the same machine for machining, and even at the same time.

### DESCRIPTION OF THE DRAWINGS

In order to complete the present description, with the aim of making the characteristics of the invention more readily understandable, the present specification is accompanied by a set of figures by way of illustration and not limitation:
Figures 1 to 3 show solutions currently in the state of the art.
Figures 4 and 5 show two solutions of the sectioned block of the present invention which have the gripping protrusion for fastening the block to a machine for the machining thereof.
Figure 6 shows a schematic view in cross section of all of the parts that make up the block object of the invention and with the simulation of the different positions (non-limiting) in which the angled channel may be designed between a position of 0° and 40°.
Figure 7 shows a perspective view of an exemplary embodiment of the block object of the invention with the gripping protrusion located on the top part thereof.
Figure 8 shows a perspective view similar to that shown in Figure 8, but of another example of the block according to the invention, in this case with the protrusion arranged on the side of the cylindrical body.

### PREFERRED EMBODIMENT OF THE INVENTION

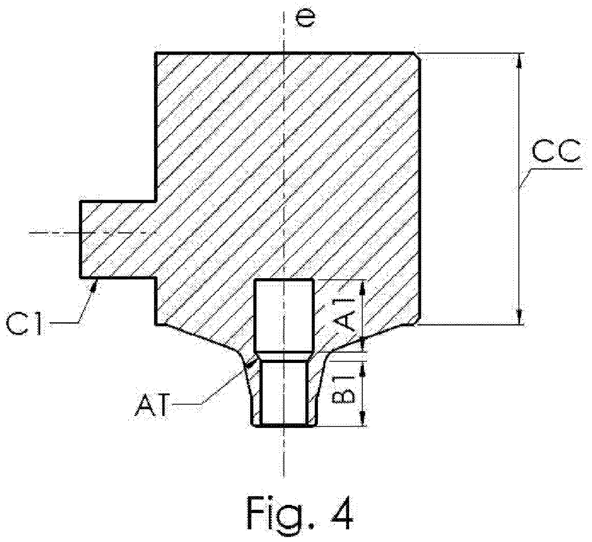

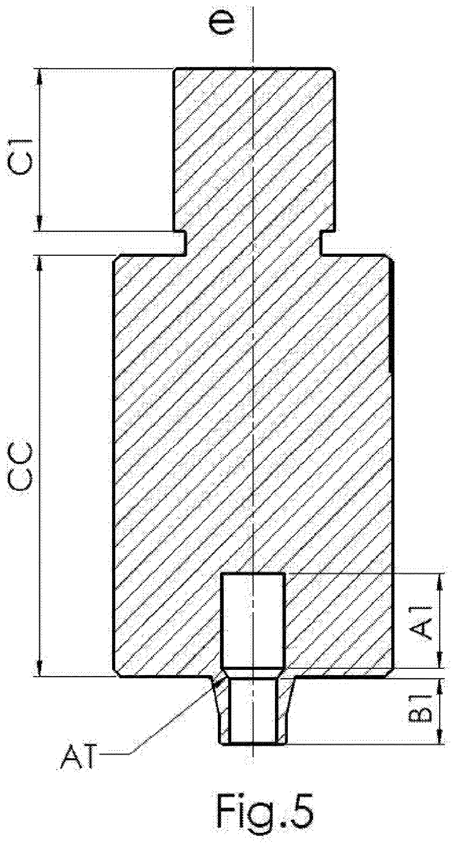

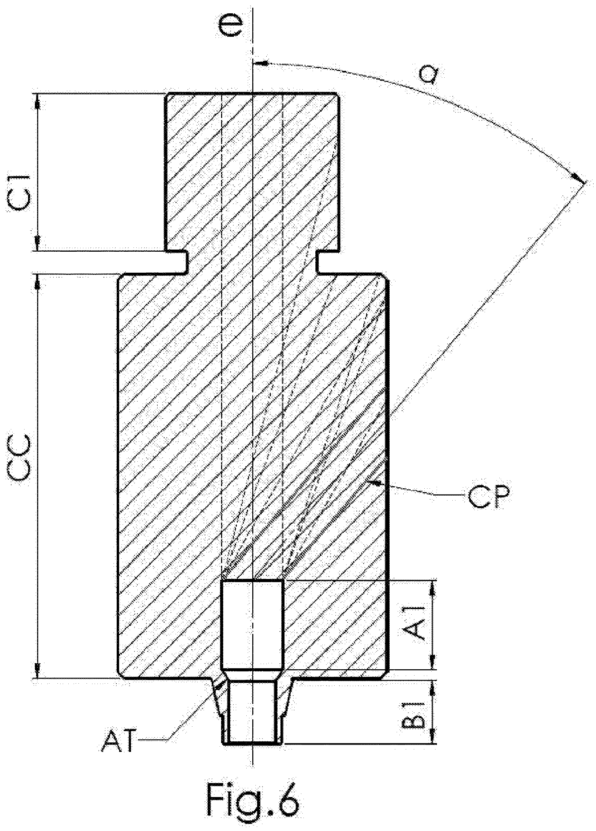

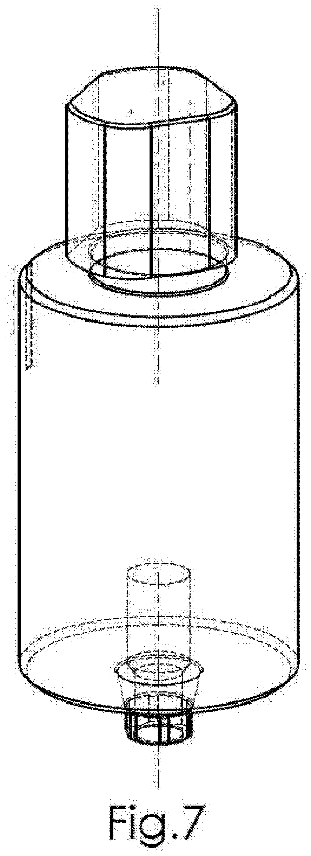

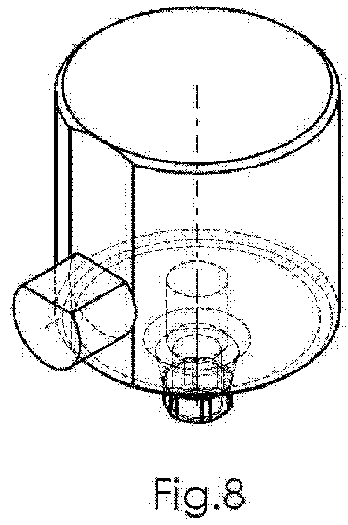

In light of the aforementioned figures, specifically Figures 4 to 8, the block object of the present invention is configured from a machined piece of titanium, Cr- Co, Tilite or another metal alloy or synthetic material used in the dental sector to fix a screw to an implant (not shown) and which comprises a cylindrical body CC with a connection base B1 on the bottom part thereof, the shape of which will be determined by the shape of the connection of the implant for which it is intended, and a gripping protrusion C1 which, located on the vertical axis (Figures 5, 6 and 7) or horizontal axis (Figures 4 and 8) of the block, has the geometry of the support of the machine for machining, usually a milling machine, to be able to fasten the block to said support and mill it externally to shape a personalised root post flange on which a dental prosthesis can be made (a piece that is also not represented in the figures). Said cylindrical body CC preferably has a diameter between 12 and 25 mm and a height between 10 and 25 mm.

Based on this already known configuration, in order to allow for the passage of the screw (not shown) for fixing to the implant after the machining thereof, the block object of the invention has an interior blind vertical channel section A1, coinciding with the axial axis (e) of the cylindrical body CC and the implant, located after an inner machining or milling AT which determines the seat of the fixing screw head for the screwing between the root post flange and the implant. Based on the position of the implant, it will be necessary to make a through channel CP with a certain angle with respect to the end of the blind vertical section A1 of the block, and to do so, after calculating and designing the angle of said through canal CP, said second through channel CP between the end of the blind vertical channel and the exterior of the block is machined. After the machining thereof, the through channel CP opens to the exterior at the end opposite the seat AT, with an angle (a) between 0° and 40° with respect to the axial axis (e) of the cylindrical body and with respect to the axis of the implant. Said through channel CP is machined, just like the external surface of the block, to shape the root post flange using CAD-CAM technology.

The height of the blind vertical channel section A1 is variable, defined by the length of the screw so that it can pass through the angled channel CP and be vertically positioned with the implant to be screwed.

Once the personalised root post flange is produced, it is placed on the implant and the fixing screw is inserted through the through channel CP, which will go through the angled through channel CP, the vertical section A1, which after machining is not blind, and after the head of said screw reaches the pre-machined seat AT in the root post flange, the base connection B1 crossing with the implant, a screw-driving tool is inserted in the through canal CP until reaching the screw head to tighten the root post flange and the implant. Subsequently the aesthetic material, which is normally ceramic, is arranged on the root post flange, which makes up the prosthetic dental piece.

## Claims

1. A block for producing personalised root post flanges for dental implantology to be screwed onto a dental implant comprising:
- A cylindrical body (CC) with an axial axis (e),
- A connection base (B1) on the bottom part of the cylindrical body with an inner channel to connect to the dental implant, and an axial axis coinciding with said of the cylindrical body (CC),
- An inner machining (AT) which determines the seat of the fixing screw head for the screwing between the block and the dental implant,
- A gripping protrusion (C1) to fasten the block to the support of a machine and enable its external machining,
**characterised in that** it comprises a blind vertical channel section (A1) after the seat of the fixing screw head (AT), the axis of the blind channel section (A1) coinciding with the axial axis (e) of the cylindrical body (CC).

2. The block according to claim 1, **characterised in that** the blind vertical channel section has a determined length dependent of the length of the fixing screw and of the type of connection required by the implant.

3. The block according to claim 1, **characterised in that** the inner machining (AT) which determines the seat of the fixing screw head is placed between the end of the blind vertical channel section (A1) and the connection base (B1).

4. The block according to claim 1, **characterised in that** the cylindrical body (CC) has a diameter between 12 and 25 mm and a height between 10 and 25 mm.

5. A method for producing a personalised root post flange for dental implantology, **characterised in that** it comprises:
- A design phase, wherein, starting from the block according to claims 1 to 4, a trajectory and angle are calculated and defined with respect to the axial axis (e) of a through channel (CP) located between the end of the blind vertical channel section (A1) and the exterior of the block, defining too the exterior shape of said block, all in function of the conditioning factors of the installed implant,
- A machining phase, wherein said block is machined by means of the machining of said through channel (CP) between the end of the blind vertical channel section (A1) and the exterior of the block to allow the passage of the fixing screw to the implant, thus communicating the end of the blind vertical channel section (A1) with the exterior of the block (CC), in accordance with the definition made in the design phase, and
- An additional machining phase, wherein the exterior of the block is machined in accordance with the definition made in the design phase.

6. The method according to claim 5, **characterised in that** the through channel (CP) is machined with an angle with respect to the axis (e) of the end of the blind vertical channel section (A1) between 0° and 40°.

7. The method, according to claim 5, **characterised in that** the two previous machining phases are carried out at the same time.

8. The method, according to claim 5, **characterised in that** it is carried out by CAD/CAM.

## Patentansprüche

1. Block zur Herstellung individueller Wurzelstiftflansche für die dentale Implantologie zum Aufschrauben auf ein Zahnimplantat, umfassend:
- einen zylindrischen Körper (CC) mit einer axialen Achse (e),
- eine Verbindungsfläche (B1) an der Unterseite des zylindrischen Körpers mit einem Innenkanal zur Verbindung mit dem Zahnimplantat und einer axialen Achse, die mit der des genannten zylindrischen Körpers (CC) zusammenfällt,
- Innenbearbeitung (AT), die den Sitz des Befestigungsschraubenkopfes für die Verschraubung zwischen dem Block und dem Zahnimplantat bestimmt,
- einen greifbaren Vorsprung (C1) zum Befestigen des Blocks an einer Maschinenhalterung und zum Ermöglichen seiner Außenbearbeitung,
**dadurch gekennzeichnet, dass** er einen blinden Vertikalkanalabschnitt (A1) nach dem Sitz des Befestigungsschraubenkopfes (AT) umfasst, wobei die Achse des blinden Kanalabschnitts (A1) mit der axialen Achse (e) des zylindrischen Körpers (CC) zusammenfällt.

2. Block nach Anspruch 1, **dadurch gekennzeichnet, dass** der blinde Vertikalkanalabschnitt eine bestimmte Länge aufweist, die von der Länge der Befestigungsschraube und von der für das Implantat erforderlichen Verbindungsart abhängt.

3. Block nach Anspruch 1, **dadurch gekennzeichnet, dass** die Innenbearbeitung (AT), die den Sitz des Befestigungsschraubenkopfes bestimmt, zwischen dem Ende des blinden Vertikalkanalabschnitts (A1) und der Verbindungsfläche (B1) angeordnet ist.

4. Block nach Anspruch 1, **dadurch gekennzeichnet, dass** der zylindrische Körper (CC) zwischen 12 und 25 mm Durchmesser und zwischen 10 und 25 mm Höhe aufweist.

5. Verfahren zur Herstellung eines personalisierten Wurzelstiftflansches für die dentale Implantologie, **dadurch gekennzeichnet, dass** es umfasst:
- eine Entwurfsphase, in der ausgehend von dem Block nach Anspruch 1 bis 4 eine Verlaufsform und ein Winkel relativ zur axialen Achse (e) eines Durchgangskanals (CP) berechnet und definiert werden, der sich zwischen dem Ende des blinden Vertikalkanalabschnitts (A1) und der Außenseite des genannten Blocks befindet, wobei stets in Abhängigkeit von den Konditionierungsfaktoren des eingesetzten Implantats auch die Außenform des Blocks definiert wird,
- eine Bearbeitungsphase, in der der genannte Block durch die Innenbearbeitung des genannten Durchgangskanals (CP) zwischen dem Ende des blinden Vertikalkanalabschnitts (A1) und der Außenseite des Blocks bearbeitet wird, um den Durchtritt der Befestigungsschraube zum Implantat zu ermöglichen, wodurch das Ende des blinden Vertikalkanalabschnitts (A1) gemäß der in der Entwurfsphase vorgenommenen Definition mit der Außenseite des Blocks (CC) verbunden wird, und
- eine zusätzliche Bearbeitungsphase, in der die Außenseite des Blocks entsprechend der in der Entwurfsphase vorgenommenen Definition bearbeitet wird.

6. Verfahren nach Anspruch 5, **dadurch gekennzeichnet, dass** der Durchgangskanal (CP) mit einem 0°- bis 40°-Winkel relativ zur Achse (e) des Endes des blinden Vertikalkanalabschnitts (A1) bearbeitet wird.

7. Verfahren nach Anspruch 5, **dadurch gekennzeichnet, dass** die beiden vorstehenden Bearbeitungsphasen gleichzeitig ausgeführt werden.

8. Verfahren nach Anspruch 5, **dadurch gekennzeichnet, dass** es mittels CAD/CAM durchgeführt wird.

## Revendications

1. Bloc pour la fabrication de moignons personnalisés pour l'implantologie dentaire à visser sur un implant dentaire comprenant :
- un corps cylindrique (CC) avec un axe axial (e),
- une base de connexion (B1) sur la partie inférieure du corps cylindrique avec un canal interne pour la connexion à l'implant dentaire, et un axe axial coïncidant avec celui du corps cylindrique (CC),
- un usinage intérieur (AT) qui détermine le siège de la tête de vis de fixation pour le vissage entre le bloc et l'implant dentaire,
- une protubérance de préhension (C1) pour fixer le bloc sur le support d'une machine et permettre son usinage extérieur,
**caractérisé en ce qu'**il comprend une section de canal vertical aveugle (A1) après le siège de la tête de vis de fixation (AT), l'axe de la section de canal aveugle (A1) coïncidant avec l'axe axial (e) du corps cylindrique (CC).

2. Bloc selon la revendication 1, **caractérisé en ce que** la section de canal vertical aveugle présente une longueur déterminée en fonction de la longueur de la vis de fixation et du type de connexion requis par l'implant.

3. Bloc selon la revendication 1, **caractérisé en ce que** l'usinage intérieur (AT) qui détermine le siège de la tête de vis de fixation est placé entre l'extrémité de la section de canal vertical aveugle (A1) et la base de connexion (B1).

4. Bloc selon la revendication 1, **caractérisé en ce que** le corps cylindrique (CC) a un diamètre compris entre 12 et 25 mm et une hauteur comprise entre 10 et 25 mm.

5. Procédé de fabrication d'un moignon personnalisé pour l'implantologie dentaire, **caractérisé en ce qu'**il comprend :
- une phase de conception, dans laquelle, à partir du bloc selon les revendications 1 à 4, une trajectoire et un angle sont calculés et définis par rapport à l'axe axial (e) d'un canal traversant (CP) situé entre l'extrémité de la section de canal vertical aveugle (A1) et l'extérieur du bloc, définissant également la forme extérieure dudit bloc, le tout en fonction des facteurs conditionnant l'implant installé,
- une phase d'usinage, dans laquelle ledit bloc est usiné au moyen de l'usinage dudit canal traversant (CP) entre l'extrémité de la section de canal vertical aveugle (A1) et l'extérieur du bloc pour permettre le passage de la vis de fixation vers l'implant, communiquant ainsi l'extrémité de la section de canal vertical aveugle (A1) avec l'extérieur du bloc (CC), conformément à la définition faite dans la phase de conception, et
- une phase d'usinage supplémentaire, dans laquelle l'extérieur du bloc est usiné conformément à la définition faite lors de la phase de conception.

6. Procédé selon la revendication 5, **caractérisé en ce que** le canal traversant (CP) est usiné avec un angle par rapport à l'axe (e) de l'extrémité de la section de canal vertical aveugle (A1) compris entre 0° et 40°.

7. Procédé, selon la revendication 5, **caractérisé en ce que** les deux phases d'usinage précédentes sont réalisées en même temps.

8. Procédé, selon la revendication 5, **caractérisé en ce qu'**il est réalisé par CAD/CAM.
